Europäisches Patentamt

European Patent Office

Office européen des brevets

(11) Publication number: **0 049 009**
**B1**

# EUROPEAN PATENT SPECIFICATION

(45) Date of publication of patent specification: **16.04.86**

(51) Int. Cl.⁴: **C 09 J 3/06, C 08 B 31/18**

(21) Application number: **81200966.0**

(22) Date of filing: **31.08.81**

(54) A process for the preparation of starch glue from starch.

(30) Priority: **17.09.80 NL 8005184**

(43) Date of publication of application:
**07.04.82 Bulletin 82/14**

(45) Publication of the grant of the patent:
**16.04.86 Bulletin 86/16**

(84) Designated Contracting States:
**DE FR GB IT NL SE**

(56) References cited:
**GB-A- 706 259**
**GB-A-2 061 307**
**US-A- 910 524**
**US-A-2 102 937**
**US-A-3 411 926**

(73) Proprietor: **CPC INTERNATIONAL INC.**
**International Plaza P.O. Box 8000**
**Englewood Cliffs New Jersey 07632 (US)**
(84) **DE FR GB IT NL SE**

(73) Proprietor: **CPC Nederland B.V.**
**Churchill Laan 11**
**NL-3527 GV Utrecht (NL)**
(84) **NL**

(72) Inventor: **Visser, Rinke Jean**
**Beukenlaan 28**
**NL-6584 CR Molenhoek (NL)**

(74) Representative: **Kupecz, Arpad**
**Octrooibureau Los en Stigter B.V. Postbox**
**20052**
**NL-1000 HB Amsterdam (NL)**

Courier Press, Leamington Spa, England.

## Description

The invention relates to a process for the preparation of a starch glue from starch, in particular native starch, according to the Stein-Hall-method by gelatinization of a part of the starch in alkaline medium, followed by addition of the rest of the starch under conditions, whereby no gelatinization occurs.

In this practice this Stein-Hall-process is carried out in two phases, whereby in the first phase the gelatinizing temperature of the starch is decreased by addition of lye such, that gelatinization occurs, whereas in the second phase the gelatinized starch in the highly alkaline medium is diluted with water and the rest of the intended quantity of starch is added. Because the alkaline medium is now highly diluted the temperature required for gelatinization to occur is raised so that it is higher than the temperature in the medium and thus more starch can be added without it being gelatinized. Thereby the viscosity of the glue mixture does not increase strongly anymore, whereby the mixture remains pumpable. In this way it appears to be possible to prepare a processable glue which contains 18—28% by weight, of dry material.

At the application of the glue onto the product to be glued the machine causes a locally high increase of the temperature, whereby at the application of the glue which contains a considerable percentage of not yet gelatinized starch, this present non-gelatinized starch gelatinizes rapidly which causes a high increase of the viscosity (and therefore of the adhesion) of the glue. For a subsequent consolidation of the adhesion the superfluous water must then be removed from the glue by drying. The glue contains more than 70% of moisture, which must be removed for the greater part.

It is evident, that this evaporation of relatively large quantities of water affects in both energetical and economical respect unfavourably the production of glued articles, particularly of corrugated cardboard, so that it would be advantageous to provide a glue having a higher contents of dry material, but which unfortunately may not be realized with the conventional technology.

The invention provides now a process for the preparation of a starch glue having a high content of starch from starch, in particular native starch, according to the Stein-Hall-method by gelatinization of a part of the starch in water in an alkaline medium, followed by addition of the rest of the water, the starch, and, if desired, usual additives, particularly boron-chemicals and/or resins for water resistant glues, under conditions, at which no gelatinization occurs, characterized in that the gelatinized starch is decomposed by addition of a water soluble oxydant in situ at 10—100°C at atmospheric pressure in such a way, that a starch glue is obtained having a dry material content of starch of 20—45%, by weight.

The decomposition of the gelatinized starch preferably takes place at 50—95°C.

Suitable oxydants to carry out this reaction are strong oxydants, such as a suitable hypochlorite, a suitable perborate, a suitable persulfate, a suitable bromate or hydrogenperoxide, optionally together with a suitable catalyst, although the perborates are highly preferred in particular sodium perborate together with a copper sulphate catalyst.

With the process of the invention a glue product advantageously can be obtained with a high content of starch between 20 and 45%, by weight, of dry material.

The present invention has the great advantage, that the glue having a dry material content of 20—45%, by weight, may relatively simply be prepared by the user, e.g. a corrugated cardboard manufacturer, in situ, by introducing the ingredients into an open container provided with a stirrer, accordingly at atmospheric pressure, and reacting them at the proper temperature and during a certain time until obtaining the desired glue which is then ready for application.

Only a thin layer of the new high starch content glue needs to be applied in order to obtain the same adhesion as with the prior art glue, while also less water has to be evaporated. As a result the machine speed at the manufacturing of corrugated cardboard can considerably be increased.

Finally, the invention also relates to a starch glue having a high atarch content and containing the usual additives, wherein gelatinized starch is decomposed by means of a water soluble oxydant.

The invention is now illustrated further by the following examples.

### Example I

In an open container provided with a stirrer 375 l of water of 55°C, 100 kg of starch and 15 l sodium hypochlorite (144 g/l) were introduced while stirring.

This mixture was stirred for 3 minutes.

Then, while stirring, 12 kg of NaOH was added, whereupon the mixture was stirred for 15 minutes. The temperature increased hereby to about 60°C.

Subsequently, 675 l of water, 600 kg of starch and 5.25 kg of borax were added to the mixture and the obtained mixture was stirred for 15 minutes.

In this way a glue was obtained having a dry material content of about 40%. This glue is ready for application.

### Example II

In an open container provided with a stirrer 375 l of water was introduced which is heated to about 65°C. Then 100 kg of starch, 1 kg of sodium perborate, 0.1 kg copper sulfate (catalyst) and 12 kg of NaOH were added. During this operation the temperature increased to about 70°C. Stirring of this mixture was continued during about 20 minutes. Then 675 l of water was added to the mixture followed by the addition of 600 kg of starch and 5.25 kg of borax. The total mixture has been stirred until the desired viscosity was obtained.

In this way a glue was obtained having a dry material content of about 40%. This glue is ready for application.

## Claims

1. A process for the preparation of a starch glue by gelatinization of a part of the starch in water in an alkaline medium, followed by decomposition of the gelatinized starch in situ by the addition of an oxidant at atmospheric pressure, followed by the addition of the rest of the water, the starch, and, if desired, usual additives, particularly boron-chemicals and/or resins for water resistant glues under conditions, at which no gelatinization occurs, characterized in that the decomposition of the gelatinized starch takes place at 50—95°C that the oxidant is water soluble and is other than barium peroxide and that a starch glue is obtained having a dry material content of starch of 20—45%, by weight.

2. The process according to claim 1, characterized in that a suitable hypochlorite, a suitable perborate, a suitable persulfate, a suitable bromate or hydrogenperoxide, optionally together with a suitable catalyst is used as water soluble oxidant.

3. The process according to claim 2, characterized in that as water soluble oxidant sodium perborate is used together with a copper sulfate catalyst.

## Patentansprüche

1. Verfahren zur Herstellung eines Stärkeleimes durch Gelatinierung einer Teilmenge der Stärke in Wasser in einem alkalischen Medium, gefolgt durch Abbau der gelatinierten Stärke in situ durch Zugabe eines Oxydationsmittels unter atmosphärischem Druck, gefolgt durch Zugabe des Restwassers, der Stärke, und/oder der üblichen Zusätze, vor allem Borchemikalien und/oder Härze für wasserbeständige Leime unter Umstände, bei denen keine Gelatinierung stattfindet, dadurch gekennzeichnet, dass der Abbau der gelatinierten Stärke stattfindet bei 50—95°C, dass das Oxydationsmittel wasserlöslich ist und anders ist als Bariumperoxyd und dass ein Stärkeleim erhalten wird mit einem Trockensubstanzgehalt der Stärke von 20—45 Gew.%.

2. Verfahren nach Anspruch 1, dadurch gekennzeichnet, dass ein geeignetes Hypochlorid, ein geeignetes Perborat, ein geeignetes Persulfat, ein geeignetes Bromat oder Wasserstoffperoxyd, gegebenenfalls zusammen mit einem geeigneten Katalysator verwendet wird als wasserlösliches Oxydationsmittel.

3. Verfahren nach Anspruch 2, dadurch gekennzeichnet, dass als wasserlösliches Oxydationsmittel Natriumperborat verwendet wird, zusammen mit einem Kupfersulfatkatalysator.

## Revendications

1. Procédé de préparation d'une colle à l'amidon par gélatinisation d'une partie de l'amidon dans l'eau dans un milieu alcalin, suivie de la décomposition de l'amidon gélatinisé in situ par l'addition d'un oxydant à la pression atmosphérique, puis de l'addition du reste de l'eau, de l'amidon et, le cas échéant, d'additifs usuels, notamment des composés chimiques contenant du bors et/ou des résines pour colles résistant à l'eau dans des conditions dans lesquelles aucune gélatinisation ne s'effectue, caractérisé en ce que la décomposition de l'amidon gélatinisé a lieu à 50—95°C, en ce que l'oxydant est hydrosoluble et est un autre composé que le peroxyde de baryum et en ce qu'on obtient une colle à l'amidon ayant une teneur en matiére amylacée de 20 à 45 % en poids sur base sèche.

2. Procédé suivant la revendication 1, caractérisé en ce qu'on utilise comme oxydant hydrosoluble un hypochlorite convenable, un perborate convenable, un persulfate convenable, un bromate convenable ou le peroxyde d'hydrogène, éventuellement en association avec un catalyseur convenable.

3. Procédé suivant la revendication 2, caractérisé en ce qu'on utilise le perborate de sodium comme oxydant hydrosoluble en association avec du sulfate de cuivre comme catalyseur.